# EUROPEAN PATENT SPECIFICATION

(11) **EP 2 822 333 B1**
(45) Date of publication and mention of the grant of the patent: **07.12.2016**
(21) Application number: 14175164.4
(22) Date of filing: 01.07.2014
(51) Int. Cl.: H04L 29/06, H04W 52/36, G06Q 20/10, G06Q 30/02, H04W 24/10, H04W 36/00, H04W 72/02, H04L 29/08, H04W 72/04, G06F 3/0484

(54) **Method and apparatus for small cell enhancements in a wireless communication system**
Verfahren und Vorrichtung für Verbesserungen in kleinen Zellen in einem drahtlosen Kommunikationssystem
Procédé et dispositif d'améliorations de petites cellules dans un système de communication sans fil

(30) Priority: 01.07.2013 US 201361841553 P
(43) Date of publication of application: 07.01.2015
(73) Proprietor: Innovative Sonic Corporation, Taipei City 11491 (TW)
(72) Inventor: Kuo, Richard Lee-Chee, Taipei City 11491 (TW)
(74) Representative: Hoefer & Partner Patentanwälte mbB

(56) References cited:
- WO-A2-2013/025562
- US-A1- 2011 292 874
- US-A1- 2012 214 537
- "3rd Generation Partnership Project; Technical Specification Group Radio Access Network; Evolved Universal Terrestrial Radio Access (E-UTRA); Medium Access Control (MAC) protocol specification (Release 11)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.1.0, 2 January 2013 (2013-01-02), pages 1-57, XP050691624, [retrieved on 2013-01-02]
- "3rd Generation Partnership Project; Technical Specification Group Radio Access Network; Evolved Universal Terrestrial Radio Access (E-UTRA) and Evolved Packet Core (EPC); User Equipment (UE) conformance specification; Part 1: Protocol conformance specification (Release 11)", 3GPP STANDARD; 3GPP TS 36.523-1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. V11.2.0, 11 March 2013 (2013-03-11), pages 464-770, XP050692311, [retrieved on 2013-03-11]
- "3rd Generation Partnership Project; Technical Specification Group Radio Access Network; Evolved Universal Terrestrial Radio Access (E-UTRA); Radio Resource Control (RRC); Protocol specification (Release 11)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.3.0, 15 March 2013 (2013-03-15), pages 1-344, XP050692273, [retrieved on 2013-03-15]

## Description

### CROSS-REFERENCE TO RELATED APPLICATIONS

The present Application claims the benefit of U.S. Provisional Patent Application Serial No. 61/841,553 filed on July 1, 2013.

### FIELD

This disclosure generally relates to wireless communication networks, and more particularly, to methods and apparatuses for small cell enhancement in a wireless communication system according to the pre-characterizing parts of independent claims 1, 9, 13, and 14, respectively. Such methods and apparatus are disclosed in WO 2013/025562 A2.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard. 3GPP TS 36.321 V11.1.0 and 3GPP TS 36.523-1 V11.2.0 are such documents. Further, US 2011/292874 A1 and US 2012/214537 A1 disclose power headroom reporting in systems where a user equipment (UE) connects to one evolved Node B (eNB) that may assign multiple component carriers or cells to the UE, wherein power headroom values of the multiple cells are transmitted to the corresponding one eNB.

### SUMMARY

Methods and apparatuses are disclosed for small cell enhancement in a wireless communication system and are defined in independent claims 1,9, 13 and 14 respectively. The respective dependent claims define preferred embodiments thereof, respectively. The method according to a first aspect includes a user equipment (UE) served by a first cell, wherein the first cell is controlled by a first evolved Node B (eNB). The method further includes receiving, by a UE, a Radio Resource Control (RRC) message for adding a second cell controlled by a second eNB to the UE. The method also includes transmitting, by the UE, a first power headroom report (PHR) to the first eNB and a second PHR to the second eNB in which both the first PHR and the second PHR contain power headroom values of both the first cell and the second cell. The method further includes triggering, by the UE, the first PHR for transmission to the first eNB if a required power backoff change of the second cell has exceeded a second threshold since a last transmission of the second PHR to the second eNB and triggering, by the UE, the second PHR for transmission to the second eNB if a required power backoff change of the first cell has exceeded a first threshold since a last transmission of the first PHR to the first eNB.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a block diagram according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other techniques.

In particular, the exemplary wireless communication systems devices described below may be designed to support one or more standards such as the standard offered by a consortium named "3rd Generation Partnership Project" referred to herein as 3GPP, including Document Nos. TS 36.331 V11.3.0, entitled "E-UTRA RRC protocol specification"; TS 36.321 V11.2.0, entitled "E-UTRA MAC protocol specification"; RP-122033, entitled "Study on Small Cell enhancements for E-UTRA and E-UTRAN - Higher-layer aspects".

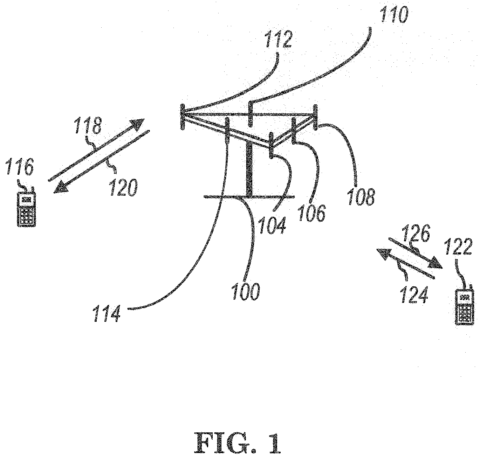

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication, wherein the forward links 120, 126 use a different frequency then that used by the corresponding reverse links 118, 124.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less 3 interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNB, or some other terminology. An access terminal (AT) may also be called user equipment (UE), a wireless communication device, terminal, access terminal or some other terminology.

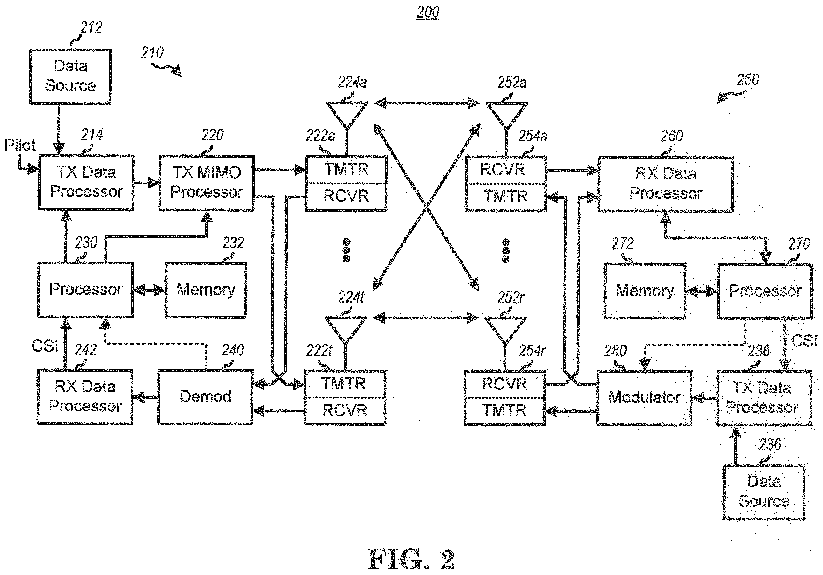

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *Nt* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

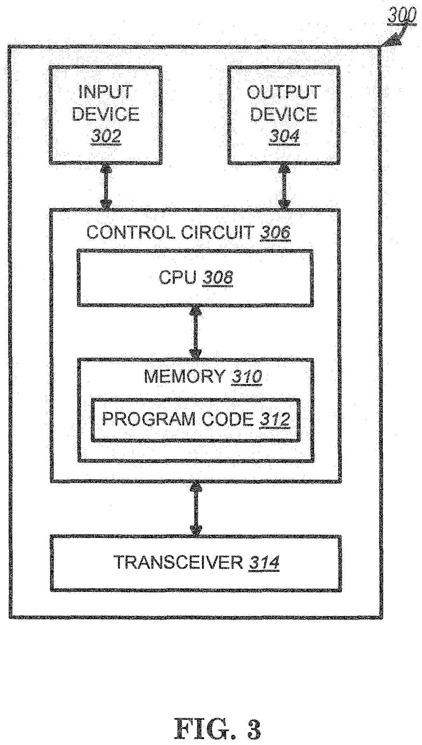

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

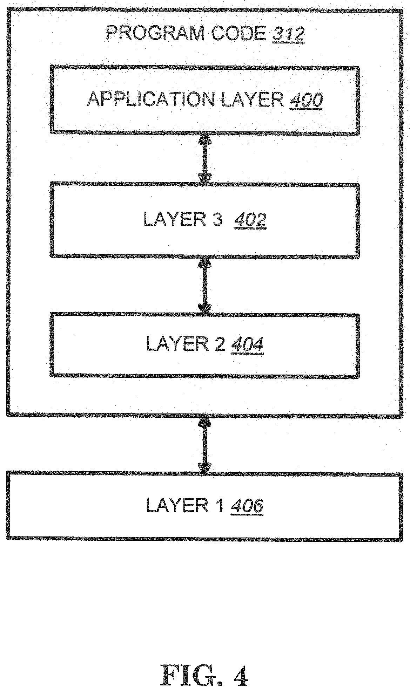

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE or LTE-A systems, the Layer 2 portion may include a Radio Link Control (RLC) layer and a Medium Access Control (MAC) layer. The Layer 3 portion may include a Radio Resource Control (RRC) layer.

Carrier aggregation (CA) is a feature to support wider bandwidth in LTE-Advanced (LTE-A). A terminal may simultaneously receive or transmit on one or multiple component carriers depending on its capabilities.

] In addition to a primary serving cell (PCell), a UE in RRC_CONNECTED mode may be configured with other secondary serving cells (SCell). The PCell is considered as always activated, while an Activation/Deactivation MAC control Element (CE) can be used to activate or deactivate an SCell as disclosed in 3GPP TS 36.321 V11.2.0. An *sCellDeactivationTimer* corresponding to the SCell may also be used for SCell status maintenance, for example when the *sCellDeactivationTimer* expires, and the corresponding SCell is implicitly considered as deactivated. A configured SCell may contain downlink (DL) resources only (i.e. a DL CC) or DL resources as well as uplink (UL) resources (i.e. a DL CC and an UL CC) as discussed in 3GPP TS 36.331 V11.3.0.

3GPP RP-122033 is a new study item for small cell enhancements on higher layer aspects for release-12. The objective of this study item is quoted below:

### 4 Objective

The objective of this study is to identify potential technologies in the protocol and architecture for enhanced support of small cell deployment and operation which should satisfy scenarios and requirements defined in TR 36.932.

The study shall be conducted on the following aspects:
- Identify and evaluate the benefits of UEs having dual connectivity to macro and small cell layers served by different or same carrier and for which scenarios such dual connectivity is feasible and beneficial.
- Identify and evaluate potential architecture and protocol enhancements for the scenarios in TR 36.932 and in particular for the feasible scenario of dual connectivity and minimize core network impacts if feasible, including:
   - Overall structure of control and user plane and their relation to each other, e.g., supporting C-plane and U-plane in different nodes, termination of different protocol layers, etc.
- Identify and evaluate the necessity of overall Radio Resource Management structure and mobility enhancements for small cell deployments:
   - Mobility mechanisms for minimizing inter-node UE context transfer and signalling towards the core network.
   - Measurement and cell identification enhancements while minimizing increased UE battery consumption.

For each potential enhancement, the gain, complexity and specification impact should be assessed.

The study shall focus on potential enhancements which are not covered by other SI/WIs.

3 GPP MAC specification (3GPP TS 36.321 V.11.2.0) discloses power headroom reporting procedure as quoted below:

### 5.4.6 Power Headroom Reporting

The Power Headroom reporting procedure is used to provide the serving eNB with information about the difference between the nominal UE maximum transmit power and the estimated power for UL-SCH transmission per activated Serving Cell and also with information about the difference between the nominal UE maximum power and the estimated power for UL-SCH and PUCCH transmission on PCell.

The reporting period, delay and mapping of Power Headroom are defined in subclause 9.1.8 of [9]. RRC controls Power Headroom reporting by configuring the two timers *periodicPHR-Timer and prohibitPHR-Timer,* and by signalling *dl-PathlossChange* which sets the change in measured downlink pathloss and the required power backoff due to power management (as allowed by P-MPR_{c} [10]) to trigger a PHR [8].

A Power Headroom Report (PHR) shall be triggered if any of the following events occur:
- *prohibitPHR-Timer* expires or has expired and the path loss has changed more than *dl-PathlossChange* dB for at least one activated Serving Cell which is used as a pathloss reference since the last transmission of a PHR when the UE has UL resources for new transmission;
   - *periodicPHR-Timer* expires;
   - upon configuration or reconfiguration of the power headroom reporting functionality by upper layers [8], which is not used to disable the function;
   - activation of an SCell with configured uplink.
   - *prohibitPHR-Timer* expires or has expired, when the UE has UL resources for new transmission, and the following is true in this TTI for any of the actived Serving Cells with configured uplink:
   - there are UL resources allocated for transmission or there is a PUCCH transmission on this cell, and the required power backoff due to power management (as allowed by P-MPR_{c} [10]) for this cell has changed more than *dl*-*PathlossChange* dB since the last transmission of a PHR when the UE had UL resources allocated for transmission or PUCCH transmission on this cell.
NOTE: The UE should avoid triggering a PHR when the required power backoff due to power management decreases only temporarily (e.g. for up to a few tens of milliseconds) and it should avoid reflecting such temporary decrease in the values of P_{CMAx,c}/PH when a PHR is triggered by other triggering conditions.
If the UE has UL resources allocated for new transmission for this TTI:
- if it is the first UL resource allocated for a new transmission since the last MAC reset, start *periodicPHR-Timer;*
- if the Power Headroom reporting procedure determines that at least one PHR has been triggered and not cancelled, and;
- if the allocated UL resources can accommodate a PHR MAC control element plus its subheader if *extendedPHR* is not configured, or the Extended PHR MAC control element plus its subheader if *extendedPHR* is configured, as a result of logical channel prioritization:
   - if *extendedPHR* is configured:
      - for each activated Serving Cell with configured uplink:
         - obtain the value of the Type 1 power headroom;
         - if the UE has UL resources allocated for transmission on this Serving Cell for this TTI:
            - obtain the value for the corresponding P_{CMAX,c} field from the physical layer;
      - *if simultaneousPUCCH-PUSCH* is configured:
         - obtain the value of the Type 2 power headroom for the PCell;
         - if the UE has a PUCCH transmission in this TTI:
            - obtain the value for the corresponding P_{CMAX},_{c} field from the physical layer;
            - instruct the Multiplexing and Assembly procedure to generate and transmit an Extended PHR MAC control element as defined in subclause 6.1.3.6a based on the values reported by the physical layer;
      - else:
         - obtain the value of the Type 1 power headroom from the physical layer;
         - instruct the Multiplexing and Assembly procedure to generate and transmit a PHR MAC control element as defined in subclause 6.1.3.6 based on the value reported by the physical layer;
      - start or *restart periodicPHR-Timer;*
      - start or restart *prohibitPHR-Timer;*
      - cancel all triggered PHR(s).
Here, [8], [9], and [10] are:
[8] 3GPP TS 36.331: "Evolved Universal Terrestrial Radio Access (E-UTRA); Radio Resource
   Control (RRC); Protocol specification".
[9] 3GPP TS 36.133: "Evolved Universal Terrestrial Radio Access (E-UTRA); Requirements for
   support of radio resource management".
[10] 3GPP TS 36.101: "Evolved Universal Terrestrial Radio Access (E-UTRA); User Equipment (UE) radio transmission and reception".

As disclosed in U.S. Patent Application Serial No. 14/139,099 filed on December 23, 2013 entitled "Method and Apparatus of Small Cell Enhancement in a Wireless Communication System ("the '099 application), various exemplary embodiments are directed to not only splitting C-plane and U-plane data, but also splitting control information handled by MAC, such as Buffer Status Report (BSR), Power Headroom Report (PHR), or Scheduling Request (SR), when a UE has dual connectivity to a macro cell and a small cell at the same time.

In one embodiment, the '099 application discloses that the PHR is divided into at least two categories, one PHR category is transmitted in macro cell(s) and one PHR category is transmitted in small cell(s). For example, if the transmission of PHR is triggered due to a small cell (or a serving cell for U-plane), e.g. path loss change, the PHR should be transmitted in one of serving cells which is a small cell (or is for U-plane). This means path loss change of the small cell only triggers a PHR for transmission to the small cell eNB which controls the small cell. Additionally, the MAC control element transmitted in a serving cell may only include status of power headroom for serving cell(s) that belongs to the same group as the serving cell (i.e., the group controlled by the same eNB). In other words, the PHR sent to the small cell eNB only contains Power Headroom (PH) values of all small cells controlled by this eNB. Accordingly, the power headroom reporting procedure for supporting dual connectivity can be improved.

For ease of discussion of the various exemplary embodiments disclosed herein, it is assumed that a UE is configured with a macro cell and a small cell. The macro cell is controlled by a Master eNB (MeNB), and the small cell is controlled by a Secondary ENB, (SeNB). It is noted that the ideas disclosed in this application can also be applicable to situations where multiple cells of the MeNB and multiple cells of the SeNB are configured to the UE.

In the various exemplary embodiments, when scheduling a serving cell under its control, an eNB knows the PH value of the serving cell under its control as well as the PH value of a serving cell controlled by another eNB. As a result, the eNB can estimate the total transmission (TX) power of the UE. If the total TX power exceeds the maximum TX power of the UE, the eNB may allocate a smaller uplink grant on the concerned serving cell to the UE. Thus, in addition to PH value of the serving cell controlled by one eNB, the PHR MAC control element sent to this eNB should also contain PH value of a serving cell controlled by another eNB.

Given the content of a PHR MAC control element described above, the UE should also trigger a PHR for transmission to one eNB if the corresponding *prohibitPHR-Timer* expires or has expired and the path loss change of a serving cell controlled by the other eNB has exceeded the threshold (e.g. *dl-PathlossChange)* since the last transmission of a PHR to the same eNB. This provides an up-to-date PH value of the concerned serving cell.

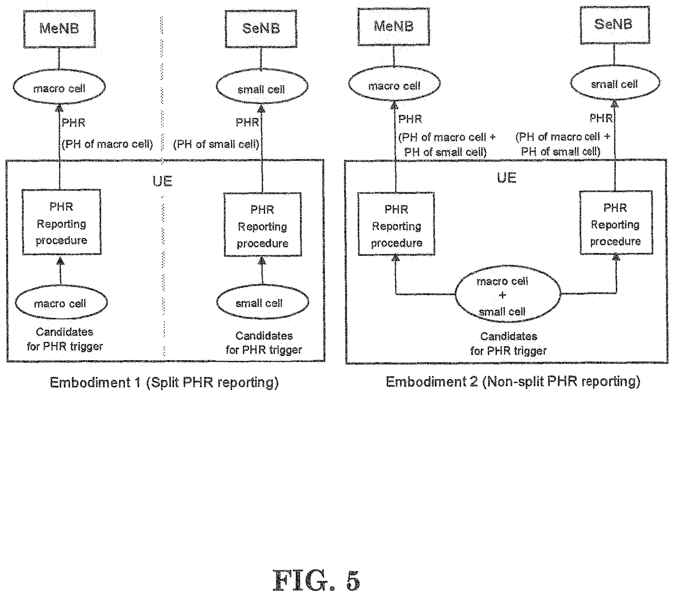

In the various embodiments disclosed herein, the UE transmits separate PHRs to separate eNBs. For example, a PHR for one eNB should also contain the PH value of a serving cell controlled by the other eNB, and the path loss change of a serving cell controlled by one eNB can also trigger a PHR for the other eNB. Thus, the PHR procedures for both eNBs are not totally split in terms of the content of a PHR report and the candidates for PHR triggers as illustrated in FIG. 5.

In LTE Rel-11, five types of PHR triggers are disclosed: path loss change, *periodicPHR-Timer* expiry, upon PHR configuration or reconfiguration, upon activation of a serving cell with configured uplink, and required power backoff change.

In the various embodiments disclosed herein regarding PHR configuration for dual connectivity, there are two potential options: one PHR configuration and two separate PHR configurations. In either option, the UE should maintain two sets of *periodicPHR*-*Timer* and *prohibitPHR-Timer,* one set for PHR reporting to each eNB. If two PHR configurations are used, a PHR is triggered only for the eNB associated with the concerned PHR configuration.

In the various embodiments disclosed herein, a PHR should preferably be triggered for each eNB upon activation of a third serving cell with configured uplink because the PH value of this serving cell should be known to both eNBs.

Further, in the various embodiments disclosed herein, similar to the case of path loss change, the UE should preferably also trigger a PHR for transmission to one eNB if the corresponding *prohibitPHR-Timer* expires or has expired and the required power backoff change of a serving cell controlled by the other eNB has exceeded the threshold (e.g. *dl-PathlossChange)* since the last transmission of a PHR to the same eNB.

In one exemplary embodiment, a method for power headroom reporting in a wireless communication system includes a UE served by a first cell, wherein the first cell is controlled by a first evolved Node B (eNB). The UE receives a Radio Resource Control (RRC) message for adding a second cell controlled by a second eNB to the UE. The UE transmits a first power headroom report (PHR) to the first eNB and a second PHR to the second eNB. According to this method, both the first PHR and the second PHR contain power headroom values of both the first cell and the second cell.

In an preferable embodiment of the above method, the UE triggers the first PHR for transmission to the first eNB if a path loss change of the second cell has exceeded a second threshold since a last transmission of the second PHR to the second eNB and triggers the second PHR for transmission to the second eNB if a path loss change of the first cell has exceeded a first threshold since a last transmission of the first PHR to the first eNB. Preferably, the UE triggers the first PHR for transmission to the first eNB if a required power backoff change of the second cell has exceeded a second threshold since a last transmission of the second PHR to the second eNB and triggers the second PHR for transmission to the second eNB if a required power backoff change of the first cell has exceeded a first threshold since a last transmission of the first PHR to the first eNB. Also preferably, the UE triggers the first PHR for transmission to the first and the second PHR for transmission to the second eNB if a third serving cell with a configured uplink is activated in the UE. Further preferably, the UE triggers the first PHR for transmission to the first eNB when a PHR configuration associated with the first eNB is configured or reconfigured and triggers the second PHR for transmission to the second eNB when a PHR configuration associated with the second eNB is configured or reconfigured, wherein there is one PHR configuration per eNB. It is further preferable that the UE maintains two sets of *periodicPHR-Timer* and *prohibitPHR- Timer,* wherein a first set is used for PHR reporting to the first eNB and a second set is used for PHR reporting to the second eNB. Still further preferably, the UE triggers the first PHR for transmission to the first eNB when a *periodicPHR-Timer* associated with the first eNB expires and triggers the second PHR for transmission to the second eNB when a *periodicPHR-Timer* associated with the second eNB expires. Also preferably, the UEstarts or restarts, a *periodicPHR*-*Timer* and a *prohibitPHR-Timer* associated with one of the first eNB and the second eNB when a PHR is transmitted to this eNB. Preferably, the UE cancels all triggered PHR(s) associated with one of the first eNB and the second eNB when a PHR is transmitted to this eNB. Preferably, the second cell is activated. Preferably, the UE activates the second cell when receiving an Activation/Deactivation (MAC) Control Element to activate the second cell. Preferably, the UE deactivates the second cell when receiving an Activation/Deactivation MAC Control Element to deactivate the second cell or when a *sCellDeactivationTimer* corresponding to the second cell expires.

Preferably, the second cell is configured with a Physical Uplink Shared Channel (PUSCH). Preferably, the *sCellDeactivationTimer* is started when the second cell is activated. Preferably, the *sCel*/*DeactivationTimer* is restarted when a Physical Downlink Control Channel (PDCCH) indicating an uplink grant or a downlink assignment for the second cell is received. Preferably, the UE does not transmit on the PUSCH if the second cell is deactivated. Preferably, the power headroom level indicates a difference between a nominal UE maximum transmit power and an estimated power for PUSCH transmission on an activated serving cell or a difference between a nominal UE maximum power and an estimated power for PUSCH and PUCCH transmission on an activated serving cell. Preferably, the first cell is a primary serving cell (PCell), and the second cell is a secondary serving cell (SCell). Preferably, the RRC message is an RRC Connection Reconfiguration message received from the first eNB.

In another exemplary embodiment, a method for receiving power headroom reports (PHRs) in a wireless communication system includes a first cell that serves a user equipment (UE), wherein the first cell is controlled by a first evolved Node B (eNB). The first eNB transmits a Radio Resource Control (RRC) message for adding a second cell controlled by a second eNB to the UE. The first eNB receives a first Power Headroom Report (PHR) from the UE. The second eNB receives a second Power Headroom Report (PHR) from the UE. According to this method, both the first PHR and the second PHR contain power headroom values of both the first cell and the second cell.

Referring back to FIGS. 3 and 4, the device 300 includes a program code 312 stored in memory 310. In one embodiment, the CPU 308 could execute program code 312 to execute one or more of the following: (i) connecting the communication device with a first cell controlled by a first evolved Node B (eNB); (ii) receiving a Radio Resource Control (RRC) message for adding a second cell controlled by a second eNB to the communication device; (iii) transmitting a first power headroom report (PHR) to the first eNB and a second PHR to the second eNB, wherein both the first PHR and the second PHR contain power headroom values of both the first cell and the second cell.

In another embodiment, the CPU 308 executes a program code 312 to execute one or more of the following: (i) connecting a first cell controlled by a first evolved Node B (eNB) with a user equipment (UE); (ii) transmitting, by the first eNB, a Radio Resource Control (RRC) message for adding a second cell controlled by a second eNB to the UE; (iii) receiving, by the first eNB, a first Power Headroom Report (PHR,) from the UE; and (iv) receiving, by the second eNB, a second Power Headroom Report (PHR) from the UE, wherein both the first PHR and the second PHR contain power headroom values of both the first cell and the second cell.

In addition, the CPU 308 can execute the program code 312 to perform all of the above-described actions and steps or others described herein, in particular those described in paragraphs [0042] to [0047].

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for power headroom reporting in a wireless communication system, wherein a user equipment, in the following also referred to as UE, is served by a first cell controlled by a first evolved Node B, in the following also referred to as eNB, the method comprising:
receiving, by the UE, a Radio Resource Control, in the following also referred to as RRC, message for adding a second cell controlled by a second eNB to the UE;
transmitting, by the UE, a first power headroom report, in the following also referred to as PHR, to the first eNB; and
transmitting, by the UE, a second PHR to the second eNB,
wherein both the first PHR and the second PHR contain power headroom values of both the first cell and the second cell
**characterized by**
triggering, by the UE, the first PHR for transmission to the first eNB if a required power backoff change of the second cell has exceeded a second threshold since a last transmission of the second PHR to the second eNB and triggering, by the UE, the second PHR for transmission to the second eNB if a required power backoff change of the first cell has exceeded a first threshold since a last transmission of the first PHR to the first eNB.

2. The method of claim 1, further comprising: triggering, by the UE, the first PHR for transmission to the first eNB if a path loss change of the second cell has exceeded a second threshold since a last transmission of the second PHR to the second eNB; and triggering, by the UE, the second PHR for transmission to the second eNB if a path loss change of the first cell has exceeded a first threshold since a last transmission of the first PHR to the first eNB.

3. The method of any one of the preceding claims 1 to 2, further comprising: triggering, by the UE, the first PHR for transmission to the first eNB and the second PHR for transmission to second eNB if a third serving cell with a configured uplink is activated in the UE.

4. The method of any one of the preceding claims 1 to 3, further comprising: triggering, by the UE, the first PHR for transmission to the first eNB when a PHR configuration associated with the first eNB is configured or reconfigured; and triggering, by the UE, the second PHR for transmission to the second eNB when a PHR configuration associated with the second eNB is configured or reconfigured, wherein there is one PHR configuration per eNB.

5. The method of any one of the preceding claims 1 to 4, further comprising: triggering, by the UE, the first PHR for transmission to the first eNB when a *periodicPHR-Timer* associated with the first eNB expires; and triggering, by the UE, the second PHR for transmission to the second eNB when *a periodicPHR-Timer* associated with the second eNB expires.

6. The method of any one of the preceding claims 1 to 5, wherein the second cell is configured with a Physical Uplink Shared Channel, in the following also referred to as PUSCH.

7. The method of any one of the preceding claims 1 to 6, wherein the second cell is activated.

8. The method of any one of the preceding claims 1 to 7, wherein the first cell is a primary serving cell, in the following also referred to as PCell, and the second cell is a secondary serving cell, in the following also referred to as SCell.

9. A method for receiving power headroom reports, in the following also referred to as PHRs, in a wireless communication system, wherein a user equipment, in the following also referred to as UE, is served by a first cell controlled by a first evolved Node B, in the following also referred to as eNB, comprising:
transmitting, by the first eNB, a Radio Resource Control, in the following also referred to as RRC, message for adding a second cell controlled by a second eNB to the UE;
receiving, by the first eNB, a first Power Headroom Report, in the following also referred to as PHR, from the UE; and
receiving, by the second eNB, a second Power Headroom Report, in the following also referred to as PHR, from the UE,
wherein both the first PHR and the second PHR contain power headroom values of both the first cell and the second cell
**characterized by**
triggering, by the UE, the first PHR for transmission to the first eNB if a required power backoff change of the second cell has exceeded a second threshold since a last transmission of the second PHR to the second eNB and triggering, by the UE, the second PHR for transmission to the second eNB if a required power backoff change of the first cell has exceeded a first threshold since a last transmission of the first PHR to the first eNB.

10. The method of claim 9, wherein the second cell is configured with a Physical Uplink Shared Channel, in the following also referred to as PUSCH.

11. The method of any one of the preceding claims 9 and 10, wherein the second cell is activated.

12. The method of any one of the preceding claims 9 to 11, wherein the first cell is a primary serving cell, in the following also referred to as PCell, and the second cell is a secondary serving cell, in the following also referred to as SCell.

13. A communication device (300) for power headroom reporting in a wireless communication system, the communication device (300) comprising:
a control circuit (306);
a processor (308) installed in the control circuit (306);
a memory (310) installed in the control circuit (306) and operatively coupled to the processor (308);
wherein the processor (308) is configured to execute a program code stored in memory (310) to provide power headroom reporting in a wireless communication system by:
connecting the communication device (300) with a first cell controlled by a first evolved Node B, in the following also referred to as eNB; and
the method steps of any one of the preceding claims 1 to 8, wherein the communication device (300) is the UE.

14. A communication device (300) for receiving power headroom reports in a wireless communication system, the communication device (300) comprising:
a control circuit (306);
a processor (308) installed in the control circuit (306);
a memory (310) installed in the control circuit (306) and operatively coupled to the processor (308);
wherein the processor (308) is configured to execute a program code stored in memory (310) to receive power headroom reports in a wireless communication system by:
connecting a first cell controlled by a first evolved Node B, in the following also referred to as eNB, with a user equipment, in the following also referred to as UE; and
the method steps of any one of the preceding claims 9 to 12, wherein the communication device (300) is the first eNB.

## Patentansprüche

1. Verfahren für eine Leistungsspielraumauswertung in einem System zur drahtlosen Kommunikation, wobei eine Teilnehmereinrichtung, im Folgenden auch als UE bezeichnet, durch eine erste Zelle bedient wird, die durch eine erste evolved Node B, im Folgenden auch als eNB bezeichnet, gesteuert wird, wobei das Verfahren aufweist:
Empfangen einer Radio-Resource-Control-Nachricht, im Folgenden auch als RRC-Nachricht bezeichnet, durch die UE für ein Hinzufügen einer zweiten Zelle, die durch eine zweite eNB gesteuert wird, zu der UE;
Übertragen einer ersten Leistungsspielraumauswertung, im Folgenden auch als PHR bezeichnet, durch die UE an die erste eNB; und
Übertragen einer zweiten PHR durch die UE an die zweite eNB,
wobei sowohl die erste PHR als auch die zweite PHR Leistungsspielraumwerte für sowohl die erste Zelle als auch die zweite Zelle aufweisen,
**gekennzeichnet durch**
Auslösen der ersten PHR für eine Übertragung an die erste eNB **durch** die UE, wenn seit einer letzten Übertragung der zweiten PHR an die zweite eNB eine notwendige Power-Backoff-Änderung der zweiten Zelle einen zweiten Schwellenwert überschritten hat, und Auslösen der zweiten PHR für eine Übertragung an die zweite eNB **durch** die UE, wenn seit einer letzten Übertragung der ersten PHR an die erste eNB eine notwendige Power-Backoff-Änderung der ersten Zelle einen ersten Schwellenwert überschritten hat.

2. Verfahren gemäß Anspruch 1, weiter aufweisend: Auslösen der ersten PHR für eine Übertragung an die erste eNB durch die UE, wenn seit einer letzten Übertragung der zweiten PHR an die zweite eNB eine Pfadverluständerung der zweiten Zelle einen zweiten Schwellenwert überschritten hat; und Auslösen der zweiten PHR für eine Übertragung an die zweite eNB durch die UE, wenn seit einer letzten Übertragung der ersten PHR an die erste eNB eine Pfadverluständerung der ersten Zelle einen ersten Schwellenwert überschritten hat.

3. Verfahren gemäß einem der vorstehenden Ansprüche 1 bis 2, weiter aufweisend:
Auslösen der ersten PHR für eine Übertragung an die erste eNB und der zweiten PHR für eine Übertragung an die zweite eNB durch die UE, wenn eine dritte Serving Cell mit einem konfigurierten Uplink in der UE aktiviert wird.

4. Verfahren gemäß einem der vorstehenden Ansprüche 1 bis 3, weiter aufweisend:
Auslösen der ersten PHR für eine Übertragung an die erste eNB durch die UE, wenn eine PHR-Konfiguration, die mit der ersten eNB verbunden ist, konfiguriert oder erneut konfiguriert wird; und Auslösen der zweiten PHR für eine Übertragung an die zweite eNB durch die UE, wenn eine PHR-Konfiguration, die mit der zweiten eNB verbunden ist, konfiguriert oder erneut konfiguriert wird, wobei es eine PHR-Konfiguration pro eNB gibt.

5. Verfahren gemäß einem der vorstehenden Ansprüche 1 bis 4, weiter aufweisend:
Auslösen der ersten PHR für eine Übertragung an die erste eNB durch die UE, wenn ein *periodicPHR-Timer,* der mit der ersten eNB verbunden ist, abläuft; und Auslösen der zweiten PHR für eine Übertragung an die zweite eNB durch die UE, wenn ein *periodicPHR-Timer,* der mit der zweiten eNB verbunden ist, abläuft.

6. Verfahren gemäß einem der vorstehenden Ansprüche 1 bis 5, wobei die zweite Zelle mit einem Physical-Uplink-Shared-Channel, im Folgenden auch als PUSCH bezeichnet, konfiguriert ist.

7. Verfahren gemäß einem der vorstehenden Ansprüche 1 bis 6, wobei die zweite Zelle aktiviert ist.

8. Verfahren gemäß einem der vorstehenden Ansprüche 1 bis 7, wobei die erste Zelle eine primäre Serving Cell, im Folgenden auch als PCell bezeichnet, ist und die die zweite Zelle eine sekundäre Serving Cell, im Folgenden auch als SCell bezeichnet, ist.

9. Verfahren für ein Empfangen von Leistungsspielraumauswertungen, im Folgenden auch als PHRs bezeichnet, in einem System zur drahtlosen Kommunikation, wobei eine Teilnehmereinrichtung, im Folgenden auch als UE bezeichnet, durch eine erste Zelle bedient wird, die durch eine erste evolved Node B, im Folgenden auch als eNB bezeichnet, gesteuert wird, aufweisend:
Übertragen einer Radio-Resource-Control-Nachricht, im Folgenden auch als RRC-Nachricht bezeichnet, durch die erste eNB an die UE für ein Hinzufügen einer zweiten Zelle, die durch eine zweite eNB gesteuert wird;
Empfangen einer ersten Leistungsspielraumauswertung, im Folgenden auch als PHR bezeichnet, von der UE durch die erste eNB; und
Empfangen einer zweiten Leistungsspielraumauswertung, im Folgenden auch als PHR bezeichnet, von der UE durch die zweite eNB,
wobei sowohl die erste PHR als auch die zweite PHR Leistungsspielraumwerte für sowohl die erste Zelle als auch die zweite Zelle aufweisen,
**gekennzeichnet durch**
Auslösen der ersten PHR für eine Übertragung an die erste eNB **durch** die UE, wenn seit einer letzten Übertragung der zweiten PHR an die zweite eNB eine notwendige Power-Backoff-Änderung der zweiten Zelle einen zweiten Schwellenwert überschritten hat, und Auslösen der zweiten PHR für eine Übertragung an die zweite eNB **durch** die UE, wenn seit einer letzten Übertragung der ersten PHR an die erste eNB eine notwendige Power-Backoff-Änderung der ersten Zelle einen ersten Schwellenwert überschritten hat.

10. Verfahren gemäß Anspruch 9, wobei die zweite Zelle mit einem Physical-Uplink-Shared-Channel, im Folgenden auch als PUSCH bezeichnet, eingerichtet ist.

11. Verfahren gemäß einem der vorstehenden Ansprüche 9 und 10, wobei die zweite Zelle aktiviert ist.

12. Verfahren gemäß einem der vorstehenden Ansprüche 9 bis 11, wobei die erste Zelle eine primäre Serving Cell, im Folgenden auch als PCell bezeichnet, ist und die zweite Zelle eine sekundäre Serving Cell, im Folgenden auch als SCell bezeichnet, ist.

13. Kommunikationsvorrichtung (300) für eine Leistungsspielraumauswertung in einem System zur drahtlosen Kommunikation, wobei die Kommunikationsvorrichtung (300) aufweist:
eine Steuerschaltung (306);
einen Prozessor (308), der in der Steuerschaltung (306) angeordnet ist;
einen Speicher (310), der in der Steuerschaltung (306) angeordnet und funktionsfähig mit dem Prozessor (308) verbunden ist;
wobei der Prozessor (308) eingerichtet ist, einen in dem Speicher (310) gespeicherten Programm-Code auszuführen, um eine Leistungsspielraumauswertung in einem System zur drahtlosen Kommunikation zur Verfügung zu stellen durch:
Verbinden der Kommunikationsvorrichtung (300) mit einer ersten Zelle, die durch eine erste evolved Node B, im Folgenden auch als eNB bezeichnet, gesteuert wird; und
die Verfahrensschritte aus einem der vorstehenden Ansprüche 1 bis 8, wobei die Kommunikationsvorrichtung (300) die UE ist.

14. Kommunikationsvorrichtung (300) für ein Empfangen von Leistungsspielraumauswertungen in einem System zur drahtlosen Kommunikation, wobei die Kommunikationsvorrichtung (300) aufweist:
eine Steuerschaltung (306);
einen Prozessor (308), der in der Steuerschaltung (306) angeordnet ist;
einen Speicher (310), der in der Steuerschaltung (306) angeordnet und funktionsfähig mit dem Prozessor (308) verbunden ist;
wobei der Prozessor (308) eingerichtet ist, einen in dem Speicher (310) gespeicherten Programm-Code auszuführen, um Leistungsspielraumauswertungen in einem System zur drahtlosen Kommunikation zu empfangen durch:
Verbinden einer ersten Zelle, die durch eine erste evolved Node B, im Folgenden auch als eNB bezeichnet, gesteuert wird, mit einer Teilnehmerausrüstung, im Folgenden auch als UE bezeichnet; und
die Verfahrensschritte aus einem der vorstehenden Ansprüche 9 bis 12, wobei die Kommunikationsvorrichtung (300) die erste eNB ist.

## Revendications

1. Procédé de rapport de marge de puissance dans un système de communication sans fil, dans lequel un équipement utilisateur, ci-après également dénommé UE, est desservi par une première cellule commandée par un premier Noeud B évolué, ci-après également dénommé eNB, le procédé comprenant le fait:
de recevoir, par l'UE, un message de commande de ressources radio, ci-après également dénommée RRC, pour ajouter une deuxième cellule commandée par un deuxième eNB à l'UE;
de transmettre, par l'UE, un premier rapport de marge de puissance, ci-après également dénommé PHR, au premier eNB; et
de transmettre, par l'UE, un deuxième PHR au deuxième eNB,
dans lequel le premier PHR et le deuxième PHR contiennent tous deux des valeurs de marge de puissance à la fois de la première cellule et de la deuxième cellule
**caractérisé par** le fait
de déclencher, par l'UE, le premier PHR pour être transmis au premier eNB si un changement de réduction de puissance nécessaire de la deuxième cellule a dépassé un deuxième seuil depuis une dernière transmission du deuxième PHR au deuxième eNB et de déclencher, par l'UE, le deuxième PHR pour être transmis au deuxième eNB si un changement de réduction de puissance nécessaire de la première cellule a dépassé un premier seuil depuis une dernière transmission du premier PHR au premier eNB.

2. Procédé de la revendication 1, comprenant en outre le fait: de déclencher, par l'UE, le premier PHR pour être transmis au premier eNB si un changement d'affaiblissement de propagation de la deuxième cellule a dépassé un deuxième seuil depuis une dernière transmission du deuxième PHR au deuxième eNB; et de déclencher, par l'UE, le deuxième PHR pour être transmis au deuxième eNB si un changement d'affaiblissement de propagation de la première cellule a dépassé un premier seuil depuis une dernière transmission du premier PHR au premier eNB.

3. Procédé de l'une quelconque des revendications précédentes 1 et 2, comprenant en outre le fait: de déclencher, par l'UE, le premier PHR pour être transmis au premier eNB et le deuxième PHR pour être transmis au deuxième eNB si une troisième cellule de desserte avec une liaison montante configurée est activée dans l'UE.

4. Procédé de l'une quelconque des revendications précédentes 1 à 3, comprenant en outre le fait: de déclencher, par l'UE, le premier PHR pour être transmis au premier eNB lorsqu'une configuration PHR associée au premier eNB est configurée ou reconfigurée; et de déclencher, par l'UE, le deuxième PHR pour être transmis au deuxième eNB lorsqu'une configuration PHR associée au deuxième eNB est configurée ou reconfigurée, dans lequel il existe une seule configuration PHR par eNB.

5. Procédé de l'une quelconque des revendications précédentes 1 à 4, comprenant en outre le fait: de déclencher, par l'UE, le premier PHR pour être transmis au premier eNB lorsqu'un *temporisateur PHR périodique* associé au premier eNB expire; et de déclencher, par l'UE, le deuxième PHR pour être transmis au deuxième eNB lorsqu'un *temporisateur PHR périodique* associé au deuxième eNB expire.

6. Procédé de l'une quelconque des revendications précédentes 1 à 5, dans lequel la deuxième cellule est configurée avec un Canal Partagé de Liaison Montante Physique, ci-après également dénommé PUSCH.

7. Procédé de l'une quelconque des revendications précédentes 1 à 6, dans lequel la deuxième cellule est activée.

8. Procédé de l'une quelconque des revendications précédentes 1 à 7, dans lequel la première cellule est une cellule de desserte primaire, ci-après également dénommée PCell, et la deuxième cellule est une cellule de desserte secondaire, ci-après également dénommée Scell.

9. Procédé pour recevoir des rapports de marge de puissance, ci-après également dénommés PHR, dans un système de communication sans fil, dans lequel un équipement utilisateur, ci-après également dénommé UE, est desservi par une première cellule commandée par un premier Noeud B évolué, ci-après également dénommé eNB, comprenant le fait:
de transmettre, par le premier eNB, un message de commande de ressources radio, ci-après dénommée RRC, pour ajouter une deuxième cellule commandée par un deuxième eNB à l'UE;
de recevoir, par le premier eNB, un premier Rapport de Marge de Puissance, ci-après également dénommé PHR, à partir de l'UE; et
de recevoir, par le deuxième eNB, un deuxième Rapport de Marge de Puissance, ci-après également dénommé PHR, à partir de l'UE,
dans lequel le premier PHR et le deuxième PHR contiennent tous deux des valeurs de marge de puissance à la fois de la première cellule et de la deuxième cellule
**caractérisé par** le fait
de déclencher, par l'UE, le premier PHR pour être transmis au premier eNB si un changement de réduction de puissance nécessaire de la deuxième cellule a dépassé un deuxième seuil depuis une dernière transmission du deuxième PHR au deuxième eNB et de déclencher, par l'UE, le deuxième PHR pour être transmis au deuxième eNB si un changement de réduction de puissance nécessaire de la première cellule a dépassé un premier seuil depuis une dernière transmission du premier PHR au premier eNB.

10. Procédé de la revendication 9, dans lequel la deuxième cellule est configurée avec un Canal Partagé de Liaison Montante Physique, ci-après également dénommé PUSCH.

11. Procédé de l'une quelconque des revendications précédentes 9 et 10, dans lequel la deuxième cellule est activée.

12. Procédé de l'une quelconque des revendications précédentes 9 à 11, dans lequel la première cellule est une cellule de desserte primaire, ci-après également dénommée PCell, et la deuxième cellule est une cellule de desserte secondaire, ci-après également dénommée Scell.

13. Dispositif de communication (300) pour un rapport de marge de puissance dans un système de communication sans fil, le dispositif de communication (300) comprenant:
un circuit de commande (306);
un processeur (308) installé dans le circuit de commande (306);
une mémoire (310) installée dans le circuit de commande (306) et couplée de manière fonctionnelle au processeur (308);
dans lequel le processeur (308) est configuré pour exécuter un code de programme stocké dans la mémoire (310) pour fournir un rapport de marge de puissance dans un système de communication sans fil par:
la connexion du dispositif de communication (300) avec une première cellule commandée par un premier Noeud B évolué, ci-après également dénommé eNB; et
les étapes du procédé de l'une quelconque des revendications précédentes 1 à 8, où le dispositif de communication (300) est l'UE.

14. Dispositif de communication (300) pour recevoir des rapports de marge de puissance dans un système de communication sans fil, le dispositif de communication (300) comprenant:
un circuit de commande (306);
un processeur (308) installé dans le circuit de commande (306);
une mémoire (310) installée dans le circuit de commande (306) et couplée de manière fonctionnelle au processeur (308);
dans lequel le processeur (308) est configuré pour exécuter un code de programme stocké dans la mémoire (310) pour recevoir des rapports de marge de puissance dans un système de communication sans fil par:
la connexion d'une première cellule commandée par un premier Noeud B évolué, ci-après également dénommé eNB, avec un équipement utilisateur, ci-après également dénommé UE; et
les étapes du procédé de l'une quelconque des revendications précédentes 9 à 12, où le dispositif de communication (300) est le premier eNB.
